# EUROPEAN PATENT SPECIFICATION

(11) **EP 2 189 427 B1**
(45) Date of publication and mention of the grant of the patent: **25.12.2013**
(21) Application number: 09165279.2
(22) Date of filing: 13.07.2009
(51) Int. Cl.: C04B 18/02, C04B 18/16, C04B 28/02, C04B 40/00, E04B 1/16, E04B 2/86, E04B 5/02, E04B 7/22, C04B 40/06

(54) **Lightweight building structure produced by using a mortar containing aggregates of cement-bonded foamed polystyrene**
Leichtbauelemente hergestellt mit einem Mörtel enthaltend Aggregate aus zement-gebundenem geschäumtem Polystyren
Éléments de construction légère produits à partier d'un mortier comprenant des agrégats, de polystyrène alvéolaire lié par ciment

(30) Priority: 19.11.2008 HU 0800701
(43) Date of publication of application: 26.05.2010
(73) Proprietor: Löglen Kft., 6725 Szeged (HU)
(72) Inventor: Antal, István, 6721 Szeged (HU)
(74) Representative: Pintz, György

(56) References cited:
- AT-B- 392 962
- DE-A1- 10 314 879
- DE-A1- 19 941 254
- TANG ET AL: "Mechanical and drying shrinkage properties of structural-graded polystyrene aggregate concrete" CEMENT AND CONCRETE COMPOSITES, ELSEVIER APPLIED SCIENCE, BARKING, GB, vol. 30, no. 5, 18 January 2008 (2008-01-18), pages 403-409, XP022575019 ISSN: 0958-9465

## Description

### The field of the invention

The invention concerns the field of the construction industry and relates to a mortar for building structures produced by the use of such a mortar.

### Background of the invention

For the production of building structures having good thermal and sound control properties, mortars containing foamed polystyrene, cement and water are used, which are formed into building units either at the site of the construction or in a factory producing building materials. Such mortar is explained in the specification of GB 1 498 383.

Building units are produced from mortar containing polystyrene foam in such a manner that the mortar is poured into a mould, pressed, and if necessary, heat treated for instance under pressure, then when the appropriate solidity is achieved, it is taken out of the mould and is allowed to stand in order to minimise the contraction tendency of such concrete containing polystyrene foam, hereinafter referred to as foam concrete. After a prescribed standing time, the building units so produced are formed into the desired size and form.

Tang et A1 published an article in the "Cement and Concrete Composites, Elsevier Applied Sciences, Barking" GB Journal (vol. 30, no. 5, pages 403-409) about mechanical and drying shrinkage properties of structural-graded polystyrene aggregate concrete. DE 103 14 879 describes a porous lightweight concrete with density 200-600 kg/m³ and a producing method of thereof. AT 392 962 patent script describes a method for producing lightweight concrete from recycled foam material additives.

Such processing cannot be carried out at the site of construction because there the mortar cannot be pressed, heat treated and be allowed to stand. If such mortar is poured into e.g. the permanent formwork during construction, problems may arise due to contraction.

The document DE 199 41 254 refers to the reuse of estrich made of polystyrene concrete. According to this specification, a new building material - twice cemented polystyrene concrete - is made by mixing polystyrene concrete with demolition waste. This new building material is then used as noise reductive base concrete.

The objective is to create such a mortar for buildings which can be applied on site, the contraction of which is small and has good sound and thermal insulation properties. Another objective is to use a mortar for buildings from which building structures and structure elements suitable to bear weight can be created.

A further objective is to create lightweight building structures with good thermal and sound insulation properties by using such mortar.

In order to achieve the set objectives, a mortar has been created which contains ground material made by grinding foam concrete that has already contracted and been allowed to mature and contains cement added thereto; water is added to this mixture upon application. Of course, the ground material, the cement and the water may be mixed at the same time too upon application.

The mortar so produced this way sets quickly, has a very good thermal conductivity coefficient, which is only 30-40% higher than a good-quality prefabricated foam concrete building unit.

In the course of the method for producing the mortar used in the invention, already set and contracted foam concrete is ground into granules no larger than 10 mm in size, and the 50-150 kg of cement and 80-2001 of water are added to this. For the sake of the processability of the mortar, the cement-water ratio may differ from the ratio usually applied in concrete mortars, it is generally higher than in the latter.

The mortar used in the invention can be produced at the site of construction because the necessary grinder can be transported easily and makes the reuse of waste generated at the construction site possible. If the amount of waste generated on site is not enough, such ground material or waste suitable for grinding can be obtained from a factory producing foam concrete products. The ground material and the required cement and water can be poured into a mortar making device, a mortar pump, which forwards the wet mortar to the place of application subsequent to mixing.

If using a quantity of cement higher than the prescribed amount the mortar produced may still be used but simultaneously with the increased solidity achievable by this, its thermal and sound insulation properties deteriorate and a tendency for contraction may arise as well.

The mortar produced with the prescribed quantities and properly applied is not solid but it is step resistant, therefore its surfaces exposed to load and abrasion must be protected by an appropriate layer.

By using the mortar in the invention, a building structure has been provided, which includes at least one layer of prefabricated foam concrete panel attached to a reinforcing frame structure, and the space between the elements of the reinforcing frame structure is filled at least partially with the mortar used in the invention, the first surface of which contacts the foam concrete panel.

The building structure according to the invention may be also formed as a floor/ceiling structure where the reinforcing frame structure contains a load bearing beam placed in the plane of the floor/ceiling, a foam concrete panel fixed to the beam from below and mortar according to the invention applied in between and above the load bearing beams. The floor/ceiling structure may be horizontal, in which case it includes horizontally arranged load bearing beams of I, C or U profiles, and preferably there is a load-distributing grate placed above the load bearing beams in the mortar.

The building structure according to the invention may include a protecting layer spread over the mortar and if necessary, flooring (80) placed thereon.

In the version of the building structure according to the invention where it is formed as a floor/ceiling structure, the panel of the floor/ceiling structure is angled below 75° from the horizontal.

In the version of the building structure according to the invention where it is formed as a standing wall element includes a first and a second layer of foam concrete panel fixed oppositely to the reinforcing frame structure, which layers constitute a fillable permanent formwork with one another and with the frame structure, and the interspace between the foam concrete panels (and the frame structure is filled with the mortar according to the invention. In the version of the building structure according to the invention where it is formed as a standing wall element, a surface finish or hard crust is formed on the free surface of the foam concrete panels opposite the one facing the mortar. One of the surfaces of the building structure is preferably constituted of a board made of foam concrete attached to a frame structure. The interspaces of the frame structure are filled with the mortar according to the invention.

So in the version of the building structure according to the invention where it is formed as a standing wall, a foam concrete board, panel is attached to both sides of the frame structure and these panels constitute a permanent formwork for the mortar according to the invention filled into the interspaces of the frame structure.

If the building structure according to the invention is a floor/ceiling structure, then the foam concrete panel constituting the permanent framework is fixed to its frame structure from below. In case of a load bearing floor/ceiling structure, preferably there is a load-distributing grate fixed to the frame structure and in order to achieve appropriate sound insulation, this load-distributing grate is covered with a layer of the mortar according to the invention of at least 3 cm but preferably of 5 cm. After 24 hours, typically a protecting layer, an estrich layer may be applied to this layer, which protecting layer may be then covered with appropriate covering-

If the building structure according to the invention is formed as a roof structure in a place where it is exposed to neither loading nor abrasion, and no load-distributing grate and no protecting layer is necessary.

If the building structure according to the invention is formed to bear roof covering, the elements for fixing the outer shell of the roof, e.g. laths, wood-blocks, may be embedded in the mortar.

The building structure according to the invention can be created very quickly; it is very light and has excellent thermal and sound insulation properties. Its further advantage is that the frame structure does not stand freely, in case of fire, the foam concrete panels protect the frame structure from quick warming. Of course, this requires the use of foam concrete that incombustible in itself.

Another advantage is that after filling in, the mortar protects the elements of the frame structure from deformation caused by loading; the elements of the frame structure, with special regard to its ranges under pressure, are practically not exposed to distortion.

The invention will be explained below with reference to exemplary embodiments shown in the drawings wherein
- Figure 1: is the horizontal plane section of the exterior load bearing wall structure created with the use of the mortar according to the invention,
- Figure 2: is the section drawing of the load bearing floor/ceiling structure transversal to the beams placed therein,
- Figure 3: is the schematic section view of the joint of the interior load bearing wall and the floor/ceiling,
- Figure 4: is the section drawing of the roof shell including an inclined floor/ceiling structure created with the application of the mortar according to the invention.

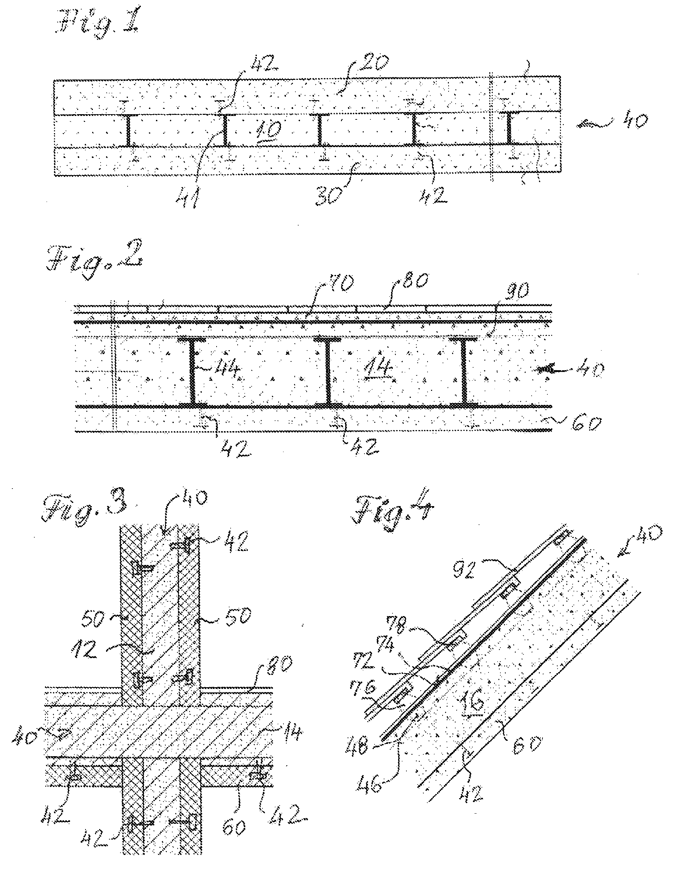

Figure 1 shows the horizontal plane section of the exterior load bearing wall, which borders the building to the outside, created with the use of the mortar according to the invention. This load bearing wall is created so that a 40 frame structure is built at first either of timber of metal profiles with appropriate corrosion protection. In this case, the figure shows the vertical 41 posts of the 40 frame structure, on which 41 posts 12-cm-thick 30 foam concrete panels are affixed from the inside and 15-cm-thick 20 foam concrete panels are affixed from the outside. The 42 fixing elements may be plastic screws or snap-in fixing elements whose pressing surface is large enough to hold the 20, 30 foam concrete panels without damage. Discs, small-holed washers or similar elements may be used to distribute pressure as necessary. In order to avoid thermal bridges and acoustic transmission paths, especially in case of 42 fixing elements made of metal, the 42 fixing elements are placed into the indentations formed in the surface of 20, 30 foam concrete panels. After mounting, 10 mortar is poured into the interspace between the 41 posts by means of a concrete pump, plastering machine, or other similar equipment suitable for this purpose, or by manual force. The density of the 10 mortar is relatively low, therefore the 20, 30 foam concrete panels are capable to bear the pressure of the filled-in 10 mortar and constitute a permanent formwork. Any excess amount of water in the 10 mortar can leak out through the slits of the 20, 30 foam concrete panels. The hardening time of the 10 mortar is approximately 2 days.

Considering that the surface of the 20, 30 foam concrete panels is not sufficiently abrasion-proof, solid, at least the exterior 20 foam concrete panel must be provided with a hard crust, the structure whereof may be formed in a manner similar to the case of exterior thermal insulation covering made with polystyrene boards. The interior 30 foam concrete panel requires a less strong surface finish, e.g. glass-fibre wallpaper applied after gypsum plastering, which then may be further worked on as desired.

It should be noted that after hardening, the 10 mortar distributes the load to the two 20, 30 foam concrete panels, and this is what makes their application in a load bearing wall structure possible. Without the application of the invention, they are not even suitable for bearing wind pressure. However, the 10 mortar makes the wall structures formed solid to such extent that they may also be used to create the exterior load bearing walls of multistoreyed buildings.

Figure 2 shows the cross section of a load bearing floor/ceiling structure. In this case, the 40 frame structure is constituted of I-section 44 beams, and 60 foam concrete panels are fixed to such 44 beams from below by means of 42 fixing elements. A 90 load-distributing grate is affixed to the top of the 44 beam, which 90 load-distributing grate may be e.g. a 5x5 cm mesh concrete-reinforcing steel mat made of 5-mm-diameter steel wire. After such fixing is carried out, the interspace between the 44 beams constituting the 40 frame structure is filled with the 14 mortar. In order to realise the sound proofing quality of the mortar according to the invention, the formation of acoustic transmission paths in the floor/ceiling structure from top to down must be avoided. To this end, the 14 mortar is poured in to a level higher than that of the 90 load-distributing grate and thus the 14 mortar will cover the 90 load-distributing grate, preferably in a 3-5 cm thick layer. On the top of this, two 3-cm-thick high-strength coats, composition floor (estrich) layers are applied, which may be covered as desired.

1 m³ of dry ground foam concrete (granule size: may be approximately between 1 mm and 10 mm) is mixed with 200 litres of water and 100 kg of cement (type: A-P 32,5R 350 trass Portland cement 20 though it will bind with any other cement of less good quality) is added. This will result in a consistence similar to earth-damp concrete. Then it is poured to the floor/ceiling structure by hand or a machine, according to the order of layers indicated on Figure 2. Thereby the polystyrene foam concrete creates a complete filling between the adjacent 1-section 44 beams so they cannot wrench because it is held by the bolted-on 60 foam concrete panel from below, the filled-in 14 mortar in between, and also by the 0.5 mm thick 90 load-distributing grate from above. The 14 mortar is poured to a level 4-5 cm higher than the 90 load-distributing grate and the 44 beam, it is compacted by means of a vibrating poker and a straight plane surface is created. Then, after the time required for hardening expires, a 4-5 cm thick concrete or estrich layer is poured thereon as a protective layer. Then it is covered with ceramics, wood or other finishing material.

The weight of the floor/ceiling structure created this way can be calculated as follows:
The weight of 1 m³ foam concrete is between 200 and 230 kg, the weight of the added cement is 100kg.
Estrich : 60 kg/m² - 3cm thick.
Steel: 10 kg/m².

From the weight of the water only the amount bound by the cement should be taken into account.

Thus, the weight of a 38 cm thick floor/ceiling structure is approximately 225 kg/m².

It should be noted that compared to a traditional concrete floor/ceiling structure, weight by surface can be reduced to its one-fifth by applying the invention. Moreover, it dries and can be covered within 48 hours. On the other hand, the full drying (hardening) time of traditional concrete floor/ceiling structures is 28 days and can be covered only thereafter.

Interior load bearing walls can also be built on the floor/ceiling structure created by using the mortar according to the invention. The 40 frame structure of the horizontal floor/ceiling indicated only by a reference sign and the 40 frame structure of the load bearing wall also indicated symbolically by a reference sign are mounted to one another. The 60 foam concrete panels constituting the lower permanent formwork of the horizontal floor/ceiling structure and the 50 foam concrete panels of the vertical load bearing wall are fixed to the 40 frame structure by 42 fixing elements. The horizontal floor/ceiling structure is created after the lower vertical load bearing walls are completed, then the 50 foam concrete panels of the vertical load bearing walls of the next level are mounted. Then the horizontal floor/ceiling structure is filled with the 14 mortar according to the invention, 24-48 hours later a high-strength estrich layer is applied, and then the interspace between the 50 foam concrete panels located above is filled with the 12 mortar according to the invention.

Figure 4 shows a 45° degree roofshell structure created by using the mortar according to the invention. In this case the 40 frame structure is constituted of sloping beams or 46 I-beams substituting the sloping beams, which are indicated by only a dotted line at the top of the figure and may be made of galvanized? steel. At first, the frame structure is assembled, then 60 foam concrete panels are attached to its lower side by means of 42 fixing elements. 48 distance pieces are fixed to the top of the 46 I-beams, which 48 distance pieces may be wood blocks. Then the interspaces of the 40 frame structure is filled with the 16 mortar according to the invention and the mortar is evened at the top level of the 48 distance pieces. The consistence of the mortar according to the invention is such that it may be used up to an angle of 75-80°. In case of a steeper angle, there is a risk of slumping of the mortar during application.

After a hardening time of approximately 2 days, a 72 underlay is placed on the surface, which underlay is a foil with controlled vapour permeability traditionally used for making roofs in the construction industry. The foil is fixed by the 74 brandering attached to the 48 distance pieces. Further 76 distance pieces may be mounted on the top of the 74 brandering at the same time or in a separate working phase, and the 78 roof battens holding 92 roof tiles are fixed thereon. By using 76 distance pieces and by the right selection of their proper size, the ventilation of the roof can be improved.

Although the invention is explained with reference to its preferable embodiments, it is obvious to the professional with average expertise in the field that various modifications and alternatives may be realised. The objective of the following claims is to extend to such modifications and alternatives.

## Claims

1. Lightweight building structure produced by using a mortar **characterised in that** the building structure includes at least one layer of prefabricated foam concrete panel (60), affixed to a reinforcing frame structure (40), where the interspaces between elements of the reinforcing frame structure (40) are at least partially filled with a mortar (10, 12, 14, 16) containing foamed polystyrene and cement containing said foamed polystyrene and a part of said cement in the form of a ground material and that it contains 50-200 kg of unbound, anhydrous cement per 1 m³ of ground material, where the ground material includes granules of 0,5-10 mm size and are produced by grinding a pressed foamed concrete that has been allowed to mature and contains foamed polystyrene, providing a first surface contacting said foam concrete panel (60).

2. The building structure according to claim 1 **characterised in that** it is formed as a standing wall element including a first and second layer of prefabricated foam concrete panels (20, 30) attached to opposite sides of the reinforcing frame structure (40), said foam concrete panels (20, 30) together with said reinforcing frame structure (40) constitute a permanent formwork defining an interspace that may be filled with the mortar (10), and the interspace between the foam concrete panels (20, 30) and the frame structure (40) is filled with said mortar (10).

3. The building structure according to claim 1 **characterised in that** it is formed as a floor/ceiling structure where the reinforcing frame structure (40) includes load bearing beams (44, 46) placed in the plane of the floor/ceiling structure, a foam concrete panel (60) fixed to the beams from below, and said mortar (14, 16) is applied between and over the load bearing beams (44, 46).

4. The building structure according to claim 3 **characterised in that** said floor/ceiling structure is horizontal and includes horizontally arranged load bearing beams (44) selected from I, C or U profiles.

5. The building structure according to claim 4 **characterised in that** it comprises a load-distributing grate (90) placed in the mortar (14) above the load bearing beams (44).

6. The building structure according to claims 4 or 5 **characterised in that** it includes a protective layer (70) spread over the mortar (14) and a flooring (80) placed onto said protective layer (70) if necessary.

7. The building structure according to claim 3 **characterised in that** the panel of the ceiling structure is angled less than 75° to the horizontal.

8. The building structure according to any of claims 1 to 7 **characterised in that** a surface finish or hard crust is formed on a free surface of said foam concrete panels (20, 30, 50, 60) opposite a surface facing said mortar (10, 12, 14, 16).

## Patentansprüche

1. Leichte Baustruktur hergestellt, indem ein Mörtel eingesetzt wurde, **dadurch gekennzeichnet, dass** die Baustruktur mindestens eine Schicht aus einer vorgefertigten Schaumbetonplatte (60) umfasst, angebracht an einer Verstärkungsrahmenkonstruktion (40), wobei die Zwischenräume zwischen den Elementen der Verstärkungsrahmenkonstruktion (40) zumindest teilweise mit einem Mörtel (10, 12, 14, 16) gefüllt sind, der geschäumtes Polystyrol und Zement, der das besagte geschäumte Polystyrol und einen Teil des genannten Zements in Form von Mahlgut beinhaltet und dass er 50-200 kg ungebundenen, wasserfreien Zement pro 1 m³ des Mahlguts enthält, wobei das Mahlgut Granulat von 0,5-10 mm Größe beinhaltet und durch Zerkleinern eines gepressten geschäumten Betons erzeugt wird, dem es möglich war, abzulagern und der geschäumtes Polystyrol enthält und eine erste Fläche für den Kontakt mit der genannten Schaumbetonplatte (60) bietet.

2. Die Baustruktur gemäß Anspruch 1, **dadurch gekenntzeichnet**, **dass** sie als stehendes Wandelement einschließlich einer ersten und zweiten Schicht aus vorgefertigten Schaumbetonplatten (20, 30) ausgebildet ist, die an den gegenüberliegenden Seiten der Verstärkungsrahmenkonstruktion (40) befestigt sind, die besagten Betonplatten (20, 30) begründen zusanunen mit der genannten Verstärkungsrahmenkonstruktion (40) eine dauerhafte Verschalung, die einen Zwischenraum festlegen, der mit dem Mörtel (10) aufgefüllt werden kann und der Zwischenraum zwischen den Schaumbetonplatten (20, 30) und die Rahmenkonstruktion (40) werden mit dem besagten Mörtel (10) gefüllt.

3. Die Baustruktur gemäß Anspruch 1, **dadurch gekennzeichnet, dass** sie als eine Fußboden-/Deckenkonstruktion ausgebildet ist, wobei die Verstärkungsrahmenkonstruktion (40) tragende Balken (44, 46) umfasst, die in der Ebene der Fußboden-/Deckenkonstruktion platziert sind, eine Schaumbetonplatte (60), die an den Balken von unten befestigt ist und der genannte Mörtel (14, 16) wird zwischen und über den tragenden Balken (44, 46) aufgebracht.

4. Die Baustruktur gemäß Anspruch 3, **dadurch gekennzeichnet, dass** die besagte Fußboden-/Deckenkonstruktion horizontal ist und horizontal angeordnete tragende Balken (44) beinhaltet, ausgewählt aus I-, C- oder U-Profilen.

5. Die Baustruktur gemäß Anspruch 4, **dadurch gekennzeichnet, dass** sie ein Lastverteilungsgitter (90) umfasst, das im Mörtel (14) über den tragenden Balken (44) angeordnet ist.

6. Die Baustruktur gemäß Anspruch 4 oder 5, **dadurch gekennzeichnet, dass** sie eine Schutzschicht (70) enthält, die über den Mörtel (14) verteilt ist und einen Belag (80), der bei Bedarf auf der genannten Schutzschicht (70) platziert wird.

7. Die Baustruktur gemäß Anspruch 3, **dadurch gekennzeichnet, dass** die Platte der Deckenstruktur um weniger als 75° zur Horizontalen abgewinkelt ist.

8. Die Baustruktur gemäß einem der Ansprüche 1 bis 7, **dadurch gekennzeichnet, dass** eine Oberflächenbeschaffenheit oder harte Kruste auf einer freien Fläche der besagten Schaumbetonplatten (20, 30, 50, 60) gebildet wird, die gegenüber einer dem besagten Mörtel (10, 12, 14, 16) zugewandten Oberfläche liegt.

## Revendications

1. La structure de la construction est légère et conçue à l'aide d'un mortier **et elle se caractérise par le fait qu'elle** soit constituée au moins d'une couche de panneaux préfabriqués de béton-mousse (60), maintenus contre un cadre renforcé (40), et que les espaces entre les éléments qui constituent la structure du cadre (40) ont été au moins partiellement remplis avec un mortier (10, 12, 14, 16) composé de polystyrène expansé et de ciment. Ce mortier contenant ledit polystyrène expansé et une certaine partie de ciment est lui-même composé de divers matériaux tels qu'environ 50 à 200 kg de ciment non-lié et anhydre par m³ d'agrégats. Les agrégats sont eux-même constitués de graviers de 0,5 à 10 mm de taille qui sont le résultat de la pression exercée sur le béton-mousse composé de polystyrène expansé arrivé à maturité, le tout fournit alors une première surface de contact pour les panneaux préfabriqués de béton-mousse susmentionnés (60).

2. La structure de la construction conformément à la déclaration 1 **se caractérise par le fait qu'elle** soit conçue comme un mur permanent composé d'une première et d'une deuxième couche de panneaux préfabriqués de béton-mousse (20, 30) fixés sur les côtés opposés de la structure renforcée du cadre (40), et que lesdits panneaux de béton-mousse (20, 30) ainsi que ladite structure renforcée du cadre (40) constituent un coffrage permanent dont les espaces peuvent être remplis par du mortier (10). Les espaces entre les panneaux de béton-mousse (20, 30) et la structure renforcée du cadre (40) peuvent également être remplis par ledit mortier (10).

3. La structure de la construction conformément à la déclaration 1 **se caractérise par le fait qu'elle** constitue un plancher/plafond dont la structure renforcée du cadre (40) comprend des poutres conçues pour soutenir la charge (44, 46). Celles-ci sont situées à l'intérieur de ce plancher/plafond. Des panneaux de béton-mousse sont (60) fixés sous les poutres, et ledit mortier (14, 16) est coulé entre et au-dessus de ces poutres qui soutiennent la charge (44, 46).

4. La structure de la construction selon la declaration 3 **se caractérise par le fait que** ladite structure qui constitue le plancher/plafond soit horizontale et composée de poutres qui soutiennent la charge et qui sont elles-mêmes disposées horizontalement (44). De plus, celles-ci ont été sélectionnées à partir des profils I, C ou U.

5. La structure de la construction selon la déclaration 4 **se caractérise par le fait qu'elle** comprend une grille conçue pour répartir la charge (90) qui se trouve dans le mortier (14). Ce dernier est lui-même situé au-dessus des poutres qui soutiennent la charge (44).

6. La structure de la construction selon les déclarations 4 ou 5 **se caractérise par le fait qu'elle** soit composée par une couche de protection (70) qui recouvre le mortier (14) et qu'un plancher (80) sera positionné sur ladite couche protectrice (70) si nécessaire.

7. La structure de la construction selon la déclaration 3 **se caractérise par le fait que le** panneau qui constitue le plafond soit incliné dans un angle inférieur à 75° par rapport à l'horizontale.

8. La structure de la construction selon toutes les déclarations de 1 à 7 **s**e **caractérise par le fait qu'**une surface de finition ou une croûte dure se forme sur la surface des panneaux de béton-mousse qui demeurent exposées à l'air libre (20, 30, 50, 60) contrairement aux surfaces recouvertes dudit mortier (10, 12, 14, 16).
